# EUROPEAN PATENT APPLICATION

(11) **EP 4 715 704 A1**
(43) Date of publication of application: **25.03.2026**
(21) Application number: 24799911.3
(22) Date of filing: 26.06.2024
(51) Int. Cl.: G06Q 10/10

(54) **AUTONOMOUS MANAGEMENT METHOD FOR PHOTOVOLTAIC TOU MODE, AND COMPUTING DEVICE AND READABLE STORAGE MEDIUM**

(30) Priority: 30.04.2023 CN 202310482410; 29.04.2024 CN 202410537060; 29.04.2024 CN 202410537089
(71) Applicant: Shanghai Sigeyuan Intelligent Technology Co., Ltd., Shanghai 200000 (CN)
(72) Inventor: ZUO, Zhelei, Shanghai 200000 (CN); JIANG, Chao, Shanghai 200000 (CN); YANG, Weizhong, Shanghai 200000 (CN)
(74) Representative: Bayramoglu et al.
(86) International application number: PCT/CN2024/101767
(87) International publication number: WO 2024/227455

(57) **Abstract**

Provided are an autonomous management method for a photovoltaic (PV) Time-of-Use (TOU) mode, a computing device, and a readable storage medium. The method includes the following processing steps: presetting a TOU data template and a plurality of configuration modes in an interaction terminal; inputting a mode selection instruction at the interaction terminal, and selecting a specific configuration mode according to the mode selection instruction; inputting a parameter configuration instruction that meets requirements of the selected configuration mode at the interaction terminal, analyzing and processing the parameter configuration instruction, and performing feature extraction on keywords in the parameter configuration instruction to form valid feature data; filling or modifying the TOU data template according to the valid feature data to form TOU configuration information data; and completing TOU configuration by issuing: sending the TOU configuration information data to a PV power station for TOU control. This application can reduce the technical threshold for operators in PV energy management, which not only improves user experience but also enables better management of PV power stations.

## Description

### TECHNICAL FIELD

The present disclosure relates to the technical field of photovoltaic (PV) control, and in particular to the technical field of PV power station management, and specifically to an autonomous management method for a PV Time-of-Use (TOU) mode, a computing device, and a readable storage medium.

### BACKGROUND TECHNOLOGY

A PV power station is a power generation system that harnesses solar energy, including electronic components made of specialized materials, such as crystalline silicon panels and inverters, and is connected to and supplies power to the power grid. The two most common power consumption management modes for PV power stations are a maximum self-consumption mode and a TOU mode. PV TOU technology combines electricity prices with energy supply and demand conditions to guide users to reduce electricity consumption during peak periods, thereby optimizing energy supply and demand and managing grid operation. Implementation of this technology relies on modern smart grid technologies, including smart metering, remote communications, cloud computing, mobile internet, big data analytics, and the like. These modern technologies can make the grid system more intelligent and transparent, and support rapid monitoring and feedback of energy supply and demand changes, enabling localized response measures.

However, neither users nor some technical personnel fully understand how to configure the TOU mode, leading to inaccurate configuration of the charging and discharging time periods. Furthermore, the charging and discharging setting parameters in the TOU mode vary across countries and power companies, which further increases configuration complexity, imposes higher technical requirements on operators, and results in a poor user experience.

In addition, particularly for personalized user configurations, due to the cumbersome TOU mode setting process, the 24-hour day must be divided into 24 time periods, and then configure each time period separately, resulting in a complex configuration process, a long operation time, and a high error rate.

Accordingly, there is an urgent need for a method that enables users to conveniently configure the PV TOU mode.

### CONTENT OF THE INVENTION

To overcome at least one of the aforementioned defects, a primary objective of the present disclosure is to provide an autonomous management method for a PV TOU mode, which has a simple setting process and can achieve autonomous and guided TOU mode setting.

In order to achieve the above objectives, the present disclosure adopts the following technical solution:
The present disclosure provides an autonomous management method for a PV TOU mode, including the following processing steps:
S1: setting up an interaction terminal, where a TOU data template and a plurality of configuration modes are preset in the interaction terminal;
S2: determining a configuration mode: inputting a mode selection instruction at the interaction terminal, and selecting a specific configuration mode according to the mode selection instruction;
S3: determining a configuration instruction: inputting a parameter configuration instruction that meets requirements of the selected configuration mode at the interaction terminal, analyzing and processing the parameter configuration instruction, and performing feature extraction on keywords in the parameter configuration instruction to form valid feature data;
S4: finalizing TOU configuration data: filling or modifying the TOU data template according to the valid feature data to form TOU configuration information data; and
S5: completing TOU configuration by issuing: sending the TOU configuration information data to a PV power station for TOU control.

According to one embodiment of the present disclosure, the configuration modes include a fully automatic configuration mode, a semi-automatic configuration mode, and an autonomous configuration mode.

According to one embodiment of the present disclosure, in the fully automatic configuration mode, the parameter configuration instruction is a TOU configuration table issued by a power company.

According to one embodiment of the present disclosure, in the semi-automatic configuration mode, the parameter configuration instruction includes a TOU configuration table issued by a power company and a user input instruction.

According to one embodiment of the present disclosure, in the autonomous configuration mode, the parameter configuration instruction is a user input instruction.

According to one embodiment of the present disclosure, the interaction terminal is provided with a communication serial port for web-based connection to an external terminal; the interaction terminal downloads the TOU configuration table from the external terminal; after import, the downloaded TOU configuration table is analyzed and processed, and standard parameters for each time period are extracted and filled into the TOU data template.

According to one embodiment of the present disclosure, during analysis and processing of the user input instruction, feature extraction is performed on keywords in the user input instruction to form a natural language-based output instruction; the output instruction is formatted and parsed to form the valid feature data; and the TOU configuration information data is partially modified according to the valid feature data.

According to one embodiment of the present disclosure, during analysis and processing of the user input instruction, feature extraction is performed on keywords in the user input instruction to form a natural language-based output instruction; the output instruction is formatted and parsed to form the valid feature data; and the TOU data template is filled or modified according to the valid feature data to form the TOU configuration information data.

According to one embodiment of the present disclosure, during analysis and processing of the user input instruction, feature extraction is performed on keywords in the user input instruction to form first feature data; operational data of the PV power station is searched and called according to the first feature data to form second feature data; comprehensive processing is performed on the second feature data and the first feature data to form a natural language-based output instruction; the output instruction is formatted and parsed to form the valid feature data; and the TOU data template is filled or modified according to the valid feature data to form the TOU configuration information data.

According to one embodiment of the present disclosure, the operational data of the PV power station includes transaction electricity prices with power companies, electricity transaction data, and historical load power consumption data.

According to one embodiment of the present disclosure, the process of analyzing and processing the user input instruction to form the natural language-based output instruction is implemented through a natural language processing tool.

According to one embodiment of the present disclosure, the natural language processing tool is one or a combination of ChatGPT, Bard, MOSS, and ERNIE Bot.

According to one embodiment of the present disclosure, in the process of processing the user input instruction to form the natural language-based output instruction through the natural language processing tool, a template generation instruction is configured through user configuration selection, and the template generation instruction is input into the natural language processing tool to define a role played by the natural language processing tool.

According to one embodiment of the present disclosure, in step S5, the TOU configuration information data is sent to an energy storage management system of the PV power station, and the energy storage management system performs specific configuration of working modes for each TOU time period according to the TOU configuration information data.

According to one embodiment of the present disclosure, the interaction terminal is configured on a user terminal or a device terminal at the PV power station.

According to one embodiment of the present disclosure, the TOU data template includes a plurality of time periods divided on an hourly basis, and corresponding to each time period, an electricity price input box and an operating status input box are configured.

According to one embodiment of the present disclosure, operating statuses in the TOU configuration information data include a standby status, a forced charging status, and a forced discharging status.

According to one embodiment of the present disclosure, the mode selection instruction and/or the parameter configuration instruction is in the form of voice, text, or an image.

According to one embodiment of the present disclosure, when the mode selection instruction and/or the parameter configuration instruction is in the form of voice, a voice recognition model is used to convert the voice into valid text;
when the mode selection instruction and/or the parameter configuration instruction is in the form of an image, a computer vision recognition algorithm is used to extract valid text from the image; and
the obtained valid text is then corrected through a basic natural language processing algorithm to correct information deviation in the extracted valid text, and a word order in formed text information is preliminarily corrected to generate correct natural language text.

According to one embodiment of the present disclosure, during analysis and processing of the user input instruction, feature extraction is performed on keywords in the natural language text, and the keywords include instructional data, descriptive data, time information data, and TOU working mode data.

In particular, the present disclosure also provides a computing device, including a memory, a processor, and a computer program stored in the memory and executable by the processor, where the processor implements the method as described above when executing the computer program.

The present disclosure further provides a computer-readable storage medium that stores a computer program, where the computer program is executed by a processor to implement the method described above. The computer-readable storage medium is preferably a non-volatile readable storage medium.

Compared with the prior art, the autonomous management method for a PV TOU mode provided by the present disclosure has the following advantages and beneficial effects:
The autonomous management method for a PV TOU mode of the present disclosure simplifies user input at the terminal. Users only need to input operation instructions through voice, text, or even images, and can input corresponding parameter configuration instructions according to different configuration modes, thereby achieving automatic or autonomous configuration of the PV TOU mode without manually entering setting parameters for each time period one by one. The setting process is simple, the setting efficiency is higher, and the error rate can also be reduced.

The autonomous management method for a PV TOU mode of the present disclosure has four setting methods: In the first method, a TOU configuration table can be downloaded from a power company according to a parameter configuration instruction and directly imported to complete local TOU configuration information data. In the second method, on the basis of the automatic setting of the TOU configuration information data in the former method, parameters in the TOU configuration information data are adjusted through further input and constraints of the parameter configuration instruction to achieve personalized fine-tuning. In the third method, setting modes for each time period can be directly input through the parameter configuration instruction, and after feature extraction, the setting modes are directly filled into the TOU data template to form the TOU configuration information data. In the fourth method, through the input of the parameter configuration instruction, power consumption habits of a user and historical operational status data of a PV power station are explicitly retrieved to complete the configuration of the TOU mode while ensuring optimal power consumption experience of the user, achieving intelligent generation of the TOU configuration information data. The setting methods are flexible and diverse, while the input and setting process is not complicated. The setting target can be quickly achieved through favorable interaction with users during the setting process.

Furthermore, the self-service management method for a PV TOU mode of the present disclosure can lower the technical threshold for operators engaged in PV energy management, which not only improves user experience but also realizes better management of PV power stations.

Furthermore, the present disclosure innovatively introduces large language models (such as ChatGPT). The input side of the large language model adopts text-based comprehensive input instructions, and the output side provides output instructions based on natural language. Both the front-end input and the back-end processing output are based on natural language processing, which better meets the usage needs of traditional users. During the final specific execution, the natural language-based output instruction is converted into a standardized format for execution, thereby reducing the processing difficulty of the autonomous management method and better meeting user needs.

### DESCRIPTION OF THE DRAWINGS

Some specific embodiments of the present disclosure will be described in detail below in an illustrative rather than restrictive manner with reference to the drawings. The same reference numerals in the drawings refer to the same or similar components or parts. Those skilled in the art should understand that the drawings are not plotted to scale. In the accompanying drawings:
FIG. 1 is a schematic flowchart of an autonomous management method for a PV TOU mode according to an embodiment of the present disclosure;
FIG. 2 is a structural diagram of a computing device according to another embodiment of the present disclosure; and
FIG. 3 is a structural diagram of a computer-readable storage medium according to another embodiment of the present disclosure.

### SPECIFIC IMPLEMENTATIONS

The following clearly and completely describes the technical solutions of the present disclosure with reference to accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In addition, the technical features involved in the various implementations of the present disclosure described below may be combined with each other as long as they do not constitute a conflict with each other.

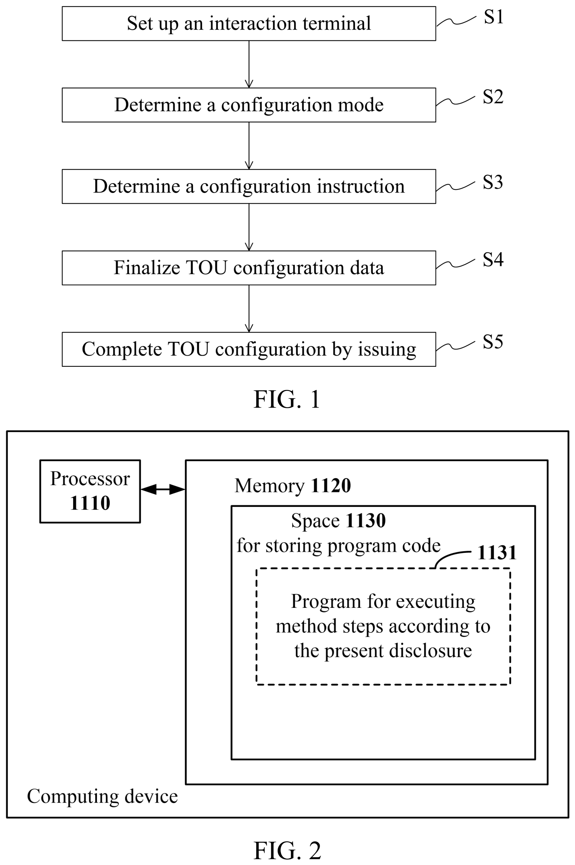

An autonomous management method for a PV TOU mode is described in this embodiment, which, as shown in FIG. 1, includes the following processing steps:
S1: An interaction terminal is set up, where a TOU data template and a plurality of configuration modes are preset in the interaction terminal.
S2: A configuration mode is determined: a mode selection instruction is input at the interaction terminal, and a specific configuration mode is selected according to the mode selection instruction.
S3: A configuration instruction is determined: a parameter configuration instruction that meets requirements of the selected configuration mode is input at the interaction terminal, the parameter configuration instruction is analyzed and processed, and feature extraction is performed on keywords in the parameter configuration instruction to form valid feature data.
S4: TOU configuration data is finalized: the TOU data template is filled or modified according to the valid feature data to form TOU configuration information data.
S5: TOU configuration is completed by issuing: the TOU configuration information data is sent to a PV power station for TOU control.

The mode selection instruction and/or the parameter configuration instruction is in the form of voice, text, or an image.

When the mode selection instruction and/or the parameter configuration instruction is in the form of voice, a voice recognition model is used to convert the voice into valid text.

When the mode selection instruction and/or the parameter configuration instruction is in the form of an image, a computer vision recognition algorithm is used to extract valid text from the image.

The obtained valid text is then corrected through a basic natural language processing algorithm to correct information deviation in the extracted valid text, and a word order in formed text information is preliminarily corrected to generate correct natural language text.

During analysis and processing of the user input instruction, feature extraction is performed on keywords in the natural language text, and the keywords include instructional data, descriptive data, time information data, and TOU working mode data.

The autonomous management method for a PV TOU mode of the present disclosure has four setting methods:
In the first method, a TOU configuration table can be downloaded from a power company according to a parameter configuration instruction and directly imported to complete local TOU configuration information data.

In the second method, on the basis of the automatic setting of the TOU configuration information data in the first method, parameters in the TOU configuration information data are adjusted through further input and constraints of the parameter configuration instruction to achieve personalized fine-tuning.

In the third method, setting modes for each time period can be directly input through the parameter configuration instruction, and after feature extraction, the setting modes are directly filled into the TOU data template to form the TOU configuration information data.

In the fourth method, power consumption habits of a user and historical operational status data of a PV power station are explicitly retrieved to complete the configuration of the TOU mode while ensuring optimal power consumption experience of the user, achieving intelligent generation of the TOU configuration information data.

It can be seen that the present disclosure can achieve more flexible and diverse setting modes according to different inputs of mode selection instructions and different parameter configuration instructions, while the input and setting process is not complicated. The setting target can be quickly achieved through favorable interaction with users during the setting process.

Specifically, the configuration modes include a fully automatic configuration mode, a semi-automatic configuration mode, and an autonomous configuration mode. The first setting method corresponds to the fully automatic configuration mode, the second setting method corresponds to the semi-automatic configuration mode, and the third and fourth setting methods correspond to the autonomous configuration mode. Below, each setting method will be elaborated in detail with examples.

The selection of the configuration mode can be determined according to the mode selection instruction. The mode selection instruction can be a selection key or a touch button arranged on the interaction terminal, or an instruction in the form of voice or text. The interaction terminal recognizes the instruction and then switches to the corresponding configuration mode.

The TOU data template includes a plurality of time periods divided on an hourly basis, and corresponding to each time period, an electricity price input box and an operating status input box are configured. The format of the TOU data template is as follows:

| Time period | Electricity price status box | Operating status box |
|---|---|---|
| 00:00-01:00 | | |
| 01:00-02:00 | | |
| 02:00-03:00 | | |
| 03:00-04:00 | | |
| 04:00-05:00 | | |
| 05:00-06:00 | | |
| 06:00-07:00 | | |
| 07:00-08:00 | | |
| 08:00-09:00 | | |
| 09:00-10:00 | | |
| 10:00-11:00 | | |
| 11:00-12:00 | | |
| 12:00-13:00 | | |
| 13:00-14:00 | | |
| 14:00-15:00 | | |
| 15:00-16:00 | | |
| 16:00-17:00 | | |
| 17:00-18:00 | | |
| 18:00-19:00 | | |
| 19:00-20:00 | | |
| 20:00-21:00 | | |
| 21:00-22:00 | | |
| 22:00-23:00 | | |
| 23:00-24:00 | | |

Operating statuses in the TOU configuration information data include a standby status, a forced charging status, and a forced discharging status.

Taking a TOU configuration table issued by a certain power company as an example, the TOU configuration table issued by the power company requires that the time periods from 23:00 to 05:00 be set to the forced charging status, the time periods from 18:00 to 21:00 be set to the forced discharging status, and no special settings be applied to the remaining time periods, which are in the standby status. In the standby status, it is determined whether to charge the storage battery or sell electricity to the power company based on the self-consumption demand of the user.

The forced charging and forced discharging in the TOU mode are explained below. During periods of peak grid load, it is necessary to provide sufficient electrical energy to the load to ensure the normal operation of the grid. In this case, utilizing the remaining battery power to supply electricity to the grid is a method to conserve energy and ensure grid operation. Therefore, "forced discharging" is implemented. During periods of off-peak grid load, in order to avoid energy waste, the battery pack needs to be charged as much as possible to provide more power during the next peak load period. Therefore, "forced charging" is implemented.

In this embodiment, the power company implements three electricity price tiers, namely, peak-hour electricity price, valley-hour electricity price, and flat-rate electricity price.

The peak-hour electricity price is 1.2 yuan/kWh. Peak hours are 08:00 to 12:00, 14:00 to 17:00, and 18:00 to 21:00.

The valley-hour electricity price is 0.4 yuan/kWh. Valley hours are 06:00 to 08:00 and 22:00 to 06:00.

The remaining periods are flat-rate hours, with an electricity price of 0.8 yuan/kWh.

### Embodiment 1:

In the fully automatic configuration mode, the parameter configuration instruction is a TOU configuration table issued by a power company. The interaction terminal is provided with a communication serial port for web-based connection to an external terminal. The interaction terminal downloads the TOU configuration table from the external terminal. After import, the downloaded TOU configuration table is analyzed and processed, and standard parameters for each time period are extracted. Specifically, the six time periods from 23:00 to 05:00 are set to the forced charging status, the three time periods from 18:00 to 21:00 are set to the forced discharging status, and the remaining time periods are set to standby status. The standard parameters are filled into the TOU data template. After the TOU data template is filled or modified, it becomes the TOU configuration information data. The completed TOU configuration information data is as shown in the following table:

| Time period | Electricity price status box (yuan/kWh) | Operating status box |
|---|---|---|
| 00:00-01:00 | 0.4 | Forced charging |
| 01:00-02:00 | 0.4 | Forced charging |
| 02:00-03:00 | 0.4 | Forced charging |
| 03:00-04:00 | 0.4 | Forced charging |
| 04:00-05:00 | 0.4 | Forced charging |
| 05:00-06:00 | 0.4 | Standby |
| 06:00-07:00 | 0.4 | Standby |
| 07:00-08:00 | 0.4 | Standby |
| 08:00-09:00 | 1.2 | Standby |
| 09:00-10:00 | 1.2 | Standby |
| 10:00-11:00 | 1.2 | Standby |
| 11:00-12:00 | 1.2 | Standby |
| 12:00-13:00 | 0.8 | Standby |
| 13:00-14:00 | 0.8 | Standby |
| 14:00-15:00 | 1.2 | Standby |
| 15:00-16:00 | 1.2 | Standby |
| 16:00-17:00 | 1.2 | Standby |
| 17:00-18:00 | 0.8 | Standby |
| 18:00-19:00 | 1.2 | Forced discharging |
| 19:00-20:00 | 1.2 | Forced charging |
| 20:00-21:00 | 1.2 | Forced charging |
| 21:00-22:00 | 0.4 | Standby |
| 22:00-23:00 | 0.4 | Standby |
| 23:00-24:00 | 0.4 | Forced charging |

### Embodiment 2:

In the semi-automatic configuration mode, the parameter configuration instruction includes a TOU configuration table issued by a power company and a user input instruction. After the TOU configuration information data as shown in Embodiment 1 is completed according to the TOU configuration table, if the user intends to go to bed before 22:00 and wishes to enable the forced charging status in advance for power backup, the user may issue a voice status instruction as the user input instruction: "Forced charging can be turned on at ten o'clock in the evening". During the analysis and processing of the user input instruction, feature extraction is performed on keywords "ten o'clock in the evening" and "turn on forced charging" in the user input instruction to form a natural language-based output instruction: "The user intends to turn on forced charging after 22:00". The output instruction is formatted and parsed to form the valid feature data: "22:00 to 23:00, forced charging". On this basis, the operating status of the corresponding time periods in the TOU configuration information data is partially modified according to the valid feature data.

### Embodiment 3:

In the autonomous configuration mode, the parameter configuration instruction is a user input instruction. The user input instruction is voice input. Specifically, the user input instruction can be a verbal command: "Set the period from 23:00 to 05:00 to forced charging status, set the period from 18:00 to 21:00 to forced discharging status, and set the remaining periods to standby status with no special configurations". During the analysis and processing of the user input instruction, feature extraction is performed on keywords in the user input instruction to form a natural language-based output instruction: "The user needs to turn on forced charging from 23:00 to 05:00 and forced discharging from 18:00 to 21:00". After the output instruction is formatted and parsed, the valid feature data is formed: "23:00 to 05:00, forced charging; 18:00 to 21:00, forced discharging". The TOU data template is filled or modified according to the valid feature data to form the TOU configuration information data as in Embodiment 1.

### Embodiment 4:

In the autonomous configuration mode, the parameter configuration instruction is a user input instruction, but unlike the instruction content in Embodiment 3, the user input instruction herein is a descriptive statement, such as: "Check the operating data of my PV equipment and my power consumption, and help plan a TOU mode suitable for me".

After the above instruction is sent to the interaction terminal via voice, the user input instruction is analyzed and processed. During the processing, feature extraction is performed on keywords in the user input instruction to form first feature data: "operating data of my PV equipment", "my power consumption", "plan TOU mode". According to the first feature data, operational data of the PV power station (including power parameters, power generation status, power consumption load status, historical power consumption habit data, and the like) is searched and called to form second feature data. Comprehensive processing is performed on the second feature data and the first feature data to form a natural language-based output instruction. After the output instruction is formatted and parsed, the valid feature data is formed. The TOU data template is filled or modified according to the valid feature data to form the TOU configuration information data.

In one embodiment, the operational data of the PV power station includes transaction electricity prices with power companies, electricity transaction data, and historical load power consumption data.

In one embodiment, the process of analyzing and processing the user input instruction to form the natural language-based output instruction is implemented through a natural language processing tool. The natural language processing tool is one or a combination of ChatGPT, Bard, MOSS, and ERNIE Bot. ChatGPT, Bard, MOSS, and ERNIE Bot are currently popular large language models. The present disclosure innovatively introduces large language models (such as ChatGPT). The input side of the large language model adopts text-based comprehensive input instructions, and the output side provides output instructions based on natural language. Both the front-end input and the back-end processing output are based on natural language processing, which better meets the usage needs of traditional users. During the final specific execution, the natural language-based output instruction is converted into a standardized format for execution, thereby reducing the processing difficulty of the autonomous management method and better meeting user needs.

In one embodiment, in the process of processing the user input instruction to form the natural language-based output instruction through the natural language processing tool, a template generation instruction is configured through user configuration selection, and the template generation instruction is input into the natural language processing tool to define a role played by the natural language processing tool. The role in the template generation instruction can be predefined and restricted, such as maintenance personnel, station commissioning (PV power station commissioning) personnel, a power station user, and the like. Different configuration guidance forms can be defined according to different roles.

According to one embodiment of the present disclosure, in step S5, the TOU configuration information data is sent to an energy storage management system of the PV power station, and the energy storage management system performs specific configuration of working modes for each TOU time period according to the TOU configuration information data.

As for the configuration of the interaction terminal, the interaction terminal may be deployed on a user terminal or a device terminal at the PV power station, and such deployment may be adjusted according to user requirements and the data processing performance of each terminal. It is even possible to reasonably split the functional modules in the interaction terminal and deploy them separately on the terminal, the device terminal, or even the cloud. In other words, the processing functions of the interaction terminal may be realized by combining the functional modules of the terminal, the device terminal, or the cloud. This is technically feasible and shall also fall within the scope of protection of the present disclosure.

In summary, the autonomous management method for a PV TOU mode of the present disclosure simplifies user input at the terminal. Users only need to input operation instructions through voice, text, or even images, and can input corresponding parameter configuration instructions according to different configuration modes, thereby achieving automatic or autonomous configuration of the PV TOU mode without manually entering setting parameters for each time period one by one. The setting process is simple, the setting efficiency is higher, and the error rate can also be reduced.

The following detailed description of the specific embodiments of the present disclosure based on the drawings will help those skilled in the art to understand the above and other objectives, advantages and features of the present disclosure.

An embodiment of the present disclosure also provides a computing device. Referring to FIG. 2, the computing device includes memory 1120, processor 1110, and computer program stored in the memory 1120 and executable by the processor 1110. The computer program is stored in space 1130 of the memory 1120 for program code. When executed by the processor 1110, the computer program implements any method step 1131 according to the present disclosure.

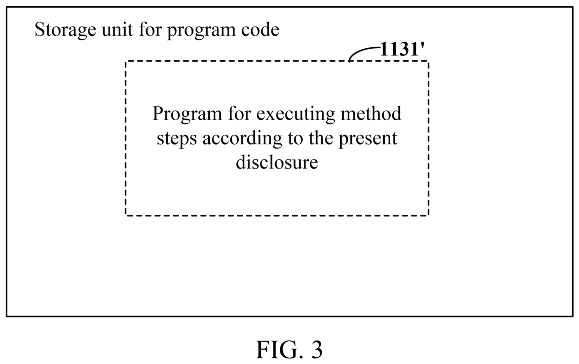

An embodiment of the present disclosure further provides a computer-readable storage medium. Referring to FIG. 3, the computer-readable storage medium includes a storage unit for program code. The storage unit is provided with program 1131' for executing the method steps according to the present disclosure, and the program is executed by a processor.

An embodiment of the present disclosure further provides a computer program product containing instructions. The computer program product, when run on a computer, causes the computer to perform method steps according to the present disclosure.

Some or all of the functions in the foregoing embodiments may be implemented by software, hardware, firmware, or any combination thereof. When software is used for implementation, the implementation can be performed in a form of a computer program product in whole or in part. The computer program product includes one or more computer instructions. When the computer program instructions are loaded and executed on a computer, the procedures or functions according to the embodiments of the present disclosure are achieved in whole or in part. The computer may be a general-purpose computer, a dedicated computer, a computer network, or another programmable apparatus. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, a coaxial cable, an optical fiber, or a Digital Subscriber Line (DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (DVD), a semiconductor medium (for example, a solid state disk (SSD)), or the like.

Those skilled in the art should realize that, the units and the algorithm steps of the examples described in the embodiments of the present disclosure can be implemented by electronic hardware, computer software, or a combination thereof. In order to clearly describe the interchangeability between the hardware and the software, compositions and steps of each example have been generally described according to functions in the foregoing descriptions. Whether the functions are performed by hardware or software depends on particular applications and design constraints of the technical solutions. Those skilled in the art may use different methods to implement the described functions for each particular application, but it should not be considered that the implementation goes beyond the scope of the present disclosure.

Those of ordinary skill in the art can understand that all or some of the steps for implementing the method in the foregoing embodiments can be completed by a program instructing a processor. The program may be stored in a computer-readable storage medium, which is a non-transitory medium, such as a random access memory, a read-only memory, a flash memory, a hard disk, a solid-state drive, a magnetic tape, a floppy disk, an optical disc, and any combination thereof.

In particular, the present disclosure also provides a computing device, including a memory, a processor, and a computer program stored in the memory and executable by the processor, where the processor implements the method as described above when executing the computer program.

The present disclosure further provides a computer-readable storage medium that stores a computer program, where the computer program is executed by a processor to implement the method described above. The computer-readable storage medium is preferably a non-volatile readable storage medium.

The above examples are intended to illustrate only the technical conception and characteristics of the present disclosure, and are intended to enable a person familiar with the technology to understand content of the present disclosure and apply the content accordingly, and shall not limit the scope of protection of the present disclosure. Any equivalent change or modification in accordance with the spiritual essence of the present disclosure shall fall within the scope of protection of the present disclosure.

## Claims

1. An autonomous management method for a photovoltaic (PV) Time-of-Use (TOU) mode, comprising processing steps as follows:
S1: setting up an interaction terminal, wherein a TOU data template and a plurality of configuration modes are preset in the interaction terminal;
S2: determining a configuration mode: inputting a mode selection instruction at the interaction terminal, and selecting a specific configuration mode according to the mode selection instruction;
S3: determining a configuration instruction: inputting a parameter configuration instruction that meets requirements of the selected configuration mode at the interaction terminal, analyzing and processing the parameter configuration instruction, and performing feature extraction on keywords in the parameter configuration instruction to form valid feature data;
S4: finalizing TOU configuration data: filling or modifying the TOU data template according to the valid feature data to form TOU configuration information data; and
S5: completing TOU configuration by issuing: sending the TOU configuration information data to a PV power station for TOU control.

2. The autonomous management method for a PV TOU mode according to claim 1, wherein the configuration modes comprise a fully automatic configuration mode, a semi-automatic configuration mode, and an autonomous configuration mode.

3. The autonomous management method for a PV TOU mode according to claim 2, wherein in the fully automatic configuration mode, the parameter configuration instruction is a TOU configuration table issued by a power company.

4. The autonomous management method for a PV TOU mode according to claim 2, wherein in the semi-automatic configuration mode, the parameter configuration instruction comprises a TOU configuration table issued by a power company and a user input instruction.

5. The autonomous management method for a PV TOU mode according to claim 2, wherein in the autonomous configuration mode, the parameter configuration instruction is a user input instruction.

6. The autonomous management method for a PV TOU mode according to claim 3 or 4, wherein the interaction terminal is provided with a communication serial port for web-based connection to an external terminal; the interaction terminal downloads the TOU configuration table from the external terminal; and after import, the downloaded TOU configuration table is analyzed and processed, and standard parameters for each time period are extracted and filled into the TOU data template.

7. The autonomous management method for a PV TOU mode according to claim 4, wherein during analysis and processing of the user input instruction, feature extraction is performed on keywords in the user input instruction to form a natural language-based output instruction; the output instruction is formatted and parsed to form the valid feature data; and the TOU configuration information data is partially modified according to the valid feature data.

8. The autonomous management method for a PV TOU mode according to claim 5, wherein during analysis and processing of the user input instruction, feature extraction is performed on keywords in the user input instruction to form a natural language-based output instruction; the output instruction is formatted and parsed to form the valid feature data; and the TOU data template is filled or modified according to the valid feature data to form the TOU configuration information data.

9. The autonomous management method for a PV TOU mode according to claim 5, wherein during analysis and processing of the user input instruction, feature extraction is performed on keywords in the user input instruction to form first feature data; operational data of the PV power station is searched and called according to the first feature data to form second feature data; comprehensive processing is performed on the second feature data and the first feature data to form a natural language-based output instruction; the output instruction is formatted and parsed to form the valid feature data; and the TOU data template is filled or modified according to the valid feature data to form the TOU configuration information data.

10. The autonomous management method for a PV TOU mode according to claim 9, wherein the operational data of the PV power station comprises transaction electricity prices with power companies, electricity transaction data, and historical load power consumption data.

11. The autonomous management method for a PV TOU mode according to any one of claims 7 to 10, wherein the process of analyzing and processing the user input instruction to form the natural language-based output instruction is implemented through a natural language processing tool.

12. The autonomous management method for a PV TOU mode according to claim 11, wherein the natural language processing tool is one or a combination of ChatGPT, Bard, MOSS, and ERNIE Bot.

13. The autonomous management method for a PV TOU mode according to claim 11, wherein in the process of processing the user input instruction to form the natural language-based output instruction through the natural language processing tool,
a template generation instruction is configured through user configuration selection, and the template generation instruction is input into the natural language processing tool to define a role played by the natural language processing tool.

14. The autonomous management method for a PV TOU mode according to claim 1, wherein in step S5, the TOU configuration information data is sent to an energy storage management system of the PV power station, and the energy storage management system performs specific configuration of working modes for each TOU time period according to the TOU configuration information data.

15. The autonomous management method for a PV TOU mode according to claim 1, wherein the interaction terminal is configured on a user terminal or a device terminal at the PV power station.

16. The autonomous management method for a PV TOU mode according to claim 1, wherein the TOU data template comprises a plurality of time periods divided on an hourly basis, and corresponding to each time period, an electricity price input box and an operating status input box are configured.

17. The autonomous management method for a PV TOU mode according to claim 16, wherein operating statuses in the TOU configuration information data comprise a standby status, a forced charging status, and a forced discharging status.

18. The autonomous management method for a PV TOU mode according to claim 1, wherein the mode selection instruction and/or the parameter configuration instruction is in the form of voice, text, or an image.

19. The autonomous management method for a PV TOU mode according to claim 18, wherein when the mode selection instruction and/or the parameter configuration instruction is in the form of voice, a voice recognition model is used to convert the voice into valid text;
when the mode selection instruction and/or the parameter configuration instruction is in the form of an image, a computer vision recognition algorithm is used to extract valid text from the image; and
the obtained valid text is then corrected through a basic natural language processing algorithm to correct information deviation in the extracted valid text, and a word order in formed text information is preliminarily corrected to generate correct natural language text.

20. The autonomous management method for a PV TOU mode according to claim 19, wherein during analysis and processing of the user input instruction, feature extraction is performed on keywords in the natural language text, and the keywords comprise instructional data, descriptive data, time information data, and TOU working mode data.

21. A computing device, comprising a memory, a processor, and a computer program stored in the memory and executable by the processor, wherein the processor implements the method according to any one of claims 1 to 20 when executing the computer program.

22. A computer-readable storage medium, storing a computer program, wherein the computer program, when executed by a processor, implements the method according to any one of claims 1 to 20.
